(19) Europäisches Patentamt
European Patent Office
Office européen des brevets

(11) **EP 1 338 892 B1**

(12) **EUROPÄISCHE PATENTSCHRIFT**

(45) Veröffentlichungstag und Bekanntmachung des Hinweises auf die Patenterteilung:
**26.10.2005 Patentblatt 2005/43**

(51) Int Cl.⁷: **G01N 27/30**, G01N 27/401, G01N 27/49

(21) Anmeldenummer: **03100425.2**

(22) Anmeldetag: **21.02.2003**

(54) **Druckresistente Bezugselektrode für elektrochemische Messungen**

Pressure-resistant reference electrode for electrochemical measurements

Electrode de référence résistant à la pression pour des mesures électrochimiques

(84) Benannte Vertragsstaaten:
**AT BE BG CH CY CZ DE DK EE ES FI FR GB GR HU IE IT LI LU MC NL PT SE SI SK TR**

(30) Priorität: **22.02.2002 DE 10207624**

(43) Veröffentlichungstag der Anmeldung:
**27.08.2003 Patentblatt 2003/35**

(73) Patentinhaber: **Mettler-Toledo GmbH 8606 Greifensee (CH)**

(72) Erfinder:
• **Osterbrink, Ulf Paul 48282, Emsdetten (DE)**
• **Thrier, Rolf 8917 Tagelswangen (CH)**

(56) Entgegenhaltungen:
DE-A- 3 411 800    US-A- 4 659 451
US-A- 4 980 043    US-A- 5 360 529

**Beschreibung**

Technisches Gebiet

Die Erfindung betrifft eine druckresistente Bezugselektrode gemäss dem Oberbegriff des Anspruches 1.

Stand der Technik

Bezugselektroden sind bekanntlich dazu vorgesehen, ein konstantes Referenzpotential für elektrochemische Messungen, beispielsweise für die Messung von pH-Werten, Redoxpotentialen oder Ionenkonzentrationen oder für amperometrische Messungen, zu liefern. Gängige Bezugselektroden umfassen eine Halbzelle mit einem Ableitelement und einem Bezugselektrolyten, wobei die Halbzelle insbesondere als Elektrode zweiter Art (beispielsweise Ag/AgCl, Hg/Hg$_2$Cl$_2$ oder Thalamid) oder als Redoxelektrode (beispielsweise Iod/Iodid) ausgestaltet sein kann. Aufgrund ihrer Funktionsweise werden diese Halbzellen durch das Eindringen störender Substanzen - auch Elektrodengifte genannt - die insbesondere vom Messmedium her eindringen können, derart beeinflusst, dass das Halbzellenpotential irreversibel gestört wird und die Bezugselektrode nicht weiter verwendet werden kann.

Für Elektroden zweiter Art gehören zu den Elektrodengiften solche Salze, die mit dem potentialbestimmenden Kation ein unlöslicheres Salz ergeben als es im Referenzsystem vorhanden ist. Beispielsweise führt der Kontakt eines Ag/AgCl-Systems mit sulfidischen Lösungen zur Fällung von Ag$_2$S, und es bildet sich ein Halbzellenpotential von Ag/Ag$_2$S aus, welches vom ursprünglichen, als Bezug verwendeten Ag/AgCl-Potential erheblich abweicht. Als Elektrodengifte können aber auch verdünnende Stoffe wirken, da beispielsweise bei der Ag/AgCl-Bezugselektrode das Halbzellenpotential nach Nernst wie folgt von der Anionenkonzentration (Cl$^-$) abhängt:

$$E = E^\circ - \frac{RT}{zF} \ln a_{Cl^-} \qquad [1]$$

Bei Redoxelektroden ist der Verdünnungseinfluss vernachlässigbar oder zumindest verringert, da das Potential vom Aktivitätsverhältnis der betreffenden Redoxpaare abhängt, welches sich bei Verdünnung in der Regel nicht oder nur wenig ändert:

$$E = E^\circ + \frac{RT}{zF} \ln \frac{[Ox]}{[Red]} \qquad [2]$$

Doch auch bei Redoxelektroden können gewisse Substanzen als Elektrodengifte wirken, da beispielsweise Hypochlorit, Chlorate, Bleichmittel etc. das Redoxpotential bei Eindringen in die potentialbestimmende Halbzelle irreversibel stören.

Da bei einer Bezugselektrode zwangsläufig ein elektrochemischer Kontakt zwischen der Halbzelle und dem jeweiligen Messmedium erforderlich ist, muss zum einen ein Austausch von Ladungsträgern zwischen dem Bezugselektrolyten und dem Messmedium gewährleistet, zum anderen aber ein Eindringen von Elektrodengiften in den Bezugselektrolyten vermieden werden. Somit ist ein Kompromiss zu schliessen und durch konstruktive Massnahme sowie durch geeignete Wahl der Referenzart und der Elektrolyte eine Bezugselektrode zu finden, bei der möglichst wenige Elektrodengifte in die Halbzelle gelangen aber trotzdem ein genügender Ionenstrom zwischen Halbzelle und Messmedium fliessen kann. Zu diesem Zweck ist es bekannt, zwischen der Halbzelle und dem Messmedium eine Überführung - auch "liquid junction" genannt und hier nachfolgend als "Junktur" bezeichnet - einzubauen, welche beispielsweise als poröses Diafragma ausgebildet ist. Des weiteren ist es bekannt, zwischen die Halbzelle und das Messmedium einen Stromschlüssel - auch Elektrolytbrücke genannt - anzuordnen, wobei dann zwischen dem Messmedium und dem Bezugselektrolyten insgesamt zwei Junkturen vorhanden sind.

Besonders schwierig ist die Vermeidung einer Elektrodenvergiftung, wenn eine Bezugselektrode bei einem - gegenüber dem in der Elektrode herrschenden - erhöhten Druck eingesetzt wird. Infolge des Druckgefälles kommt es zu einer Konvektion vom Messmedium in die Bezugselektrode, die naturgemäss auch zu einem Einschleppen von im Messmedium vorhandenen Elektrodengiften führt.

Die DE 3411800A1 beschreibt eine gattungsgemässe Bezugselektrode, die eine Halbzelle sowie einen zur Schliessung eines elektrochemischen Kontaktes zwischen der Halbzelle und einem Messmedium vorgesehenen, mit einem Primärelektrolyten gefüllten primären Stromschlüssel aufweist. Die Halbzelle enthält einen Bezugselektrolyten sowie ein in diesen getauchtes Ableitelement, die in einer Halbzellenkammer angeordnet sind. Die Halbzellenkammer ist durch ein Glasröhrchen gebildet, welches am unteren Ende eine zum primären Stromschlüssel führende Primär-Junktur in Form eines ersten Diafragmas aufweist.

Der primäre Stromschlüssel befindet sich in einem Gehäuse, das zum Eintauchen in ein Messmedium vorgesehen ist und eine Mess-Junktur aufweist, welche den elektrochemischen Kontakt zwischen Primärelektrolyten und Messmedium gewährleistet. Dadurch, dass die Mess-Junktur gemäss der DE 3411800A1 durch ein auf einer flexiblen Membran gelagertes zweites Diafragma gebildet ist, wird ein Aufbau von Druckdifferenzen zwischen Messmedium und Primärelektrolyten vermieden und damit eine Konvektion durch die Mess-Junktur verhindert. Die Membran ist allerdings mechanisch nicht stabil genug, um auch grosse Druckunterschiede zu kompensieren und grosse Verformungen mechanisch auszuhalten und funktioniert nur in Kombination mit einem vollständig gefüllten Referenzraum, bei dem nur hydraulische Drücke kompensiert werden und somit nur geringe Verformungen durch die Membran auszuhalten sind. Des weiteren wird mit einer Bezugselektrode gemäss DE 3411800A1 zwar ein Druckausgleich zwischen Messmedium und Primärelektrolyten, nicht aber zwischen Primärelektrolyten und Bezugselektrolyten erzielt. Im Ergebenis stellt sich ein Druckgefälle zwischen Primärelektrolyten und Bezugselektrolyten ein, welches eine höchst unerwünschte Konvektion durch die Primär-Junktur bewirkt. Dies kann insbesondere eine Vergiftung der Halbzelle und damit eine Veränderung des Halbzellenpotentials bewirken.

Die US 5,360,529 beschreibt eine Bezugselektrode mit einer Halbzelle und einem primären Stormschlüssel, welche mit entsprechenden Gelelektrolyten befüllt sind und von einem äusseren Gehäuse umgeben sind. Zweck dieser Ummantelungen ist die Verbesserung der mechanischen Stabilität des an sich mechanisch wenig stabilen Gelelektrolyten. Als Gehäusematerial wird nebst dem hierfür üblichen Glas auch Polyethylen erwähnt. Die US 5,360,529 enthält keinerlei Hinweise über einen mechanischen Druckausgleich zwischen Messmedium und Innenraum des Elektrodengehäuses. Insbesondere findet sich darin keinerlei Handlungsanweisung über die Vermeidung einer unerwünschten Konvektion in die oder aus der Halbzelle.

Darstellung der Erfindung

Aufgabe der Erfindung ist es, eine verbesserte Bezugselektrode anzugeben, welche die gennannten Nachteile nicht aufweist und insbesondere als duckresistente Bezugselektrode für elektrochemische Messungen einsetzbar ist.

Gelöst wird diese Aufgabe durch die im Anspruch 1 definierte Bezugselektrode.

Die erfindungsgemässe Bezugselektrode umfasst eine Halbzelle sowie einen zur Schliessung eines elektrochemischen Kontaktes zwischen der Halbzelle und einem Messmedium vorgesehenen primären Stromschlüssel, welcher einen Primärelektrolyten enthält. Die Halbzelle weist einen Bezugselektrolyten sowie ein in diesen getauchtes Ableitelement auf, die in einer Halbzellenkammer angeordnet sind, welche mit einer zum primären Stromschlüssel führenden Primär-Junktur versehen ist und ansonsten mediumdicht ausgebildet ist. Dadurch, dass die Halbzellenkammer einen flexiblen Wandbereich aufweist, welcher so ausgebildet ist, dass eine Druckdifferenz zwischen primärem Stromschlüssel und Halbzelle im wesentlichen ohne Konvektion durch die Primär-Junktur ausgleichbar ist, wird eine Konvektion durch die Primär-Junktur vermieden. Dementsprechend wird insbesondere das Eindringen von Substanzen, welche eine unerwünschte Veränderung des elektrochemischen Potentials der Halbzelle bewirken, verhindert. Die Halbzellenkammer ist innerhalb des primären Stromschlüssels angeordnet. Insbesondere kann dabei der primäre Stromschlüssel in einem vergleichsweise robusten äusseren Gehäuse untergebracht sein, welches zudem auch die Halbzellenkammer enthält. Damit wird unter anderem erreicht, dass sich der flexible Wandteil der Halbzellenkammer im Inneren des Gehäuses befindet.

Gemäss Anspruch 2 ist der flexible Wandbereich durch einen Schlauch gebildet.

Die im Anspruch 3 definierte Bezugselektrode eignet sich für eine Herstellung mit Dünnfilmtechnik; damit lässt sich insbesondere eine sehr flache Bezugselektrode realisieren. Die im Anspruch 4 definierte Bezugselektrode kann in modularer Bauweise hergestellt werden, was unter anderem eine Anpassung an spezifische Erfordernisse des vorgesehenen Einsatzbereichs erlaubt.

Vorteilhafte Ausgestaltungen sind in den abhängigen Ansprüchen beschrieben.

Grundsätzlich sind verschiedene Ausgestaltungen für die Primär-Junktur möglich. Gemäss Anspruch 5 ist die Primär-Junktur durch ein Diafragma gebildet. Insbesondere kann gemäss Anspruch 6 das Diafragma flexibel ausgebildet sein und damit den flexiblen Wandbereich oder einen Teil desselben bilden.

Je nach Anwendungsbereich der Bezugselektrode ist die in Anspruch 7 definierte Ausgestaltung besonders vorteilhaft. Dadurch, dass die Halbzellenkammer einen zwischen der Halbzelle und der Primär-Junktur angeordneten sekundären Stromschlüssel enthält, lässt sich eine bessere Trennung zwischen potentialbestimmender Halbzelle und Messmedium bewerkstelligen, wodurch eine unerwünschte Kontamination der Halbzelle erschwert wird. Dabei kann gemäss Anspruch 8 der flexible Wandbereich der Halbzelle in einem Abschnitt derselben vorgesehen sein, in welchem der sekundäre Stromschlüssel angeordnet ist.Gemäss Anspruch 9 ist der flexible Wandbereich durch eine Folie gebildet.

Es kann sich als vorteilhaft erweisen, wie im Anspruch 10 definiert, das Ableitelement als Leiterbahn auszubilden.

Um eine Kontamination der potentialbestimmenden Halbzelle möglichst lang hinauszuzögern sollte eine schnelle Diffusion vom Messmedium bis zur Halbzelle möglichst vermieden werden. Insbesondere kann gemäss Anspruch 11 die Halbzellenkammer und/oder der primäre Stromschlüssel mit einem mäanderförmigen Diffusionsweg ausgstattet werden, was letztlich einer Verlängerung des Diffusionswegs ohne unerwünschte Vergrösserung der Aussenabmessungen entspricht. Desweiteren kann gemäss Anspruch 12 vorgesehen werden, dass einer oder mehrere der darin befindlichen Elektrolyten in Gelform vorliegen, wodurch die Diffusionsgeschwindigkeit reduziert wird.

Besonders vorteilhaft ist die Ausgestaltung nach Anspruch 13, wonach die Primär-Junktur als stark verdichtete Junktur ausgestaltet ist, so dass eine Konvektion durch die Primär-Junktur weitestgehend vermieden wird.

## Kurze Beschreibung der Zeichnungen

Ausführungsbeispiele der Erfindung werden nachfolgend anhand der Zeichnungen näher beschrieben, dabei zeigen:

Figur 1     eine Bezugselektrode, im Längsschnitt;

Figur 2     eine weitere Bezugselektrode, im Längsschnitt;

Figur 3     eine weitere Bezugselektrode, teilweise zerlegt, in Draufsicht;

Figur 4     einen Bausatz für eine weitere Bezugselektrode, im Längsschnitt.

## Wege zur Ausführung der Erfindung

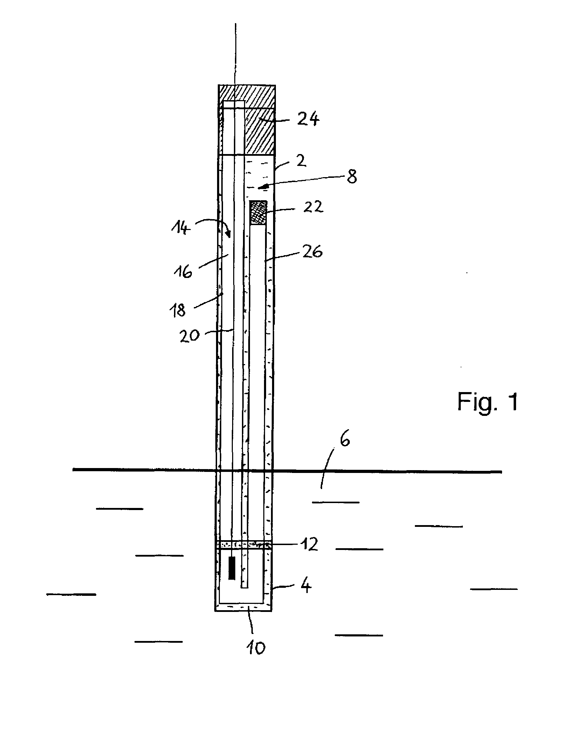

Die in der Figur 1 dargestellte Bezugselektrode weist ein rohrförmiges Gehäuse 2 auf, dessen unteres Ende 4 im gezeigten Beispiel in ein Messmedium 6 eingetaucht ist. Ein primärer Stromschlüssel 8 wird durch einen im Gehäuse 2 enthaltenen Primärelektrolyten 10 gebildet, der über eine am unteren Ende 4 angeordnete Mess-Junktur 12 in elektrochemischem Kontakt mit dem Messmedium 6 steht. Als Mess-Junktur 12 dient hier ein ringförmiges poröses Diafragma. Des weiteren enthält die Bezugselektrode eine als Bezugselement wirkende elektrochemische Halbzelle 14, welche eine mit einem Bezugselektrolyten 16 befüllte Halbzellenkammer 18 sowie ein in den Bezugselektrolyten 16 getauchtes Ableitelement 20 umfasst. Im gezeigten Beispiel ist die Halbzelle 14 als Elektrode zweiter Art, beispielsweise als Silber-/Silberchlorid-Elektrode, ausgebildet, wobei der Bezugselektrolyt 16 mit AgCl gesättigt ist. Die Halbzellenkammer 18 weist eine Primär-Junktur 22 auf, durch welche ein elektrochemischer Kontakt zwischen dem Bezugselektrolyten 16 und dem Primärelektrolyten 10 gewährleistet ist. Ansonsten ist die Halbzellenkammer 18 mediumdicht ausgebildet, wobei das Ableitelement 20 durch einen oberen Abschlussteil 24 der Bezugselektrode aus der Halbzellenkammer 18 geführt ist. Mit der gezeigten Anordnung wird in an sich bekannter Weise ein elektrochemischer Kontakt zwischen der Halbzelle 14 und dem Messmedium 6 geschaffen.

Die Halbzellenkammer 18 ist durch einen elastischen Schlauch gebildet, welcher durch den Bezugselektrolyten 16 vollständig gefüllt ist und dessen flexible Wandung 26 ein veränderbares Innenvolumen der Halbzellenkammer 18 ergibt, so dass eine Druckdifferenz zwischen primärem Stromschlüssel und Halbzelle im wesentlichen ohne Konvektion durch die Primär-Junktur ausgleichbar ist.

Vorzugsweise wird für die Halbzellenkammer 18 ein Schlauchmaterial mit einer Härte von maximal 70 (Shore A) verwendet. Der Schlauch sollte möglichst dünnwandig sein, damit eine möglichst vollständige Druckübertragung auf den in der Halbzellenkammer befindlichen Elektrolyten zustande kommt. Durch Verwendung eines Schlauches mit nicht kreisrundem Querschnitt lässt sich bei vorgegebener Wandstärke eine bessere Verformbarkeit und damit eine bessere Druckübertragung erreichen. Für einen kreisrunden Silikonschlauch mit einer Härte von 50 Shore A und einer Temperaturbeständigkeit bis 200°C wurden gute Ergebnisse mit einer Wanddicke von maximal 1/3 des Schlauch-Aussendurchmessers, beispielsweise mit einem Aussendurchmesser von 1.6 mm und einer Wandstärke von 0.4 mm, erzielt. Weitere geeignete flexible Materialien sind elastisches PVC (max. 60°C), alle Kautschuke wie NBR (max. 120°C), HNBR (max. 150°C), Naturgummi (max. 80°C), Chlorkautschuke, Fluorsilikonelastomere, Butadienrubber und weitere bekannte Elastomere. Die temperaturbeständigen Materialien wie HNBR und Silikon sind insbesondere auch für sterilisierbare Bezugselektroden geeignet. Da der dem Messmedium am nächsten befindliche Elektrolyt im Laufe der Zeit die Zusammensetzung des Messmediums annimmt, sind bei besonders agressiven Messmedien chemikalienresistente Elastomere wie Fluorsilkon, Fluorkautschuke (Viton, Kalretz) bevorzugt. Der flexible Wandbereich der Bezugselektrode kann auch aus einem thermoplastische Elastomer gebildet sein, wobei sich aufgrund der Wärmeverformbarkeit bei Bedarf besondere Formgebungen erreichen lassen. Da solche Materialien in der Regel weniger elastisch als die zuvor genannten Materialien sind, müssen dünnere Wandstärken vorgesehen werden, um eine Druckübertragung zu gewährleisten.

Die Primär-Junktur 22 besteht im gezeigten Beispiel aus einem Keramikdiafragma, welches vorgängig mit einer hydrophilen Schicht, beispielsweise ein Acrylderivatgel mit geringem Wasseranteil, belegt wurde und so zu einer stark verdichteten inneren Überführung verbaut wurde. Vorteilhafterweise wird die Halbzellenkammer 18 möglichst lang ausgestaltet, um den Vergiftungsweg zur Halbzelle 14 soweit wie möglich zu verlängern und so eine höhere Lebensdauer der Elektrode zu erreichen. Zusätzlich zu einem langen Diffusionsweg können durch eine Gelierung des Bezugselektrolyten auch die Diffusionskoeffizienten für darin wandernde Ionen erheblich verkleinert werden. Diese Massnahmen führen zu einer drastisch erhöhten Einsatzdauer der Bezugselektrode, was vor allem bei kritischen Messmedien sehr vorteilhaft ist.

Im gezeigten Beispiel ist die elastische Halbzellenkammer 18 im Primärlektrolyten 10 eingebettet, welcher seinerseits von dem aus einem robusten Glas oder Kunstoff gefertigten Gehäuse 2 umschlossen wird. Als Mess-Junktur kann anstelle des gezeigten porösen Keramikdiafragmas 12 ein Diafragma aus porösem schmutzabweisenden Teflon oder eines anderen hierfür geeigneten Materials verwendet werden.

Die beschriebene Bezugselektrode ist insofern druckresistent, als ein allfällig im primären Stromschlüssel 8 auftretender Überdruck von der elastisch ausgebildeten Halbzellenkammer 18 aufgenommen und auf den Bezugselektrolyten 16 übertragen wird. Im Ergebnis findet eine Verkleinerung des Volumens der Halbzellenkammer 18 statt, bis der innere Druck im Bezugselektrolyten 16 dem auf die Halbzellenkammer 18 wirkenden Aussendruck entspricht. Aufgrund dieses Druckausgleichs stellt sich an der Primär-Junktur 22 kein Druckgradient ein, so dass eine unerwünschte Druckgradient-getriebene Konvektion durch die Primär-Junktur 22 vermieden wird.

Die für den Druckausgleich erforderliche Volumenverkleinerung hängt unter anderem davon ab, wie die Halbzellenkammer 18 befüllt ist, wobei insbesondere bedeutsam ist, dass Gase wesentlich kompressibler als andere Medien sind. Sofern die Halbzellenkammer 18 im wesentlichen vollständig mit einem in flüssiger, gelförmiger oder allenfalls in fester Form vorliegenden Bezugselektrolyten 16 gefüllt ist, wird zum Druckausgleich eine wesentlich geringere Volumenverkleinerung benötigt als wenn in der Halbzellenkammer 18 eine Luft- bzw. Gastasche vorhanden ist. Gerade durch die hier beschriebene Verwendung eines flexiblen Schlauches lässt sich durch Wahl eines genügend grossen Verhältnisses von Schlauchlänge zu Schlauchdurchmesser auch bei einem verhältnismässig grossen Luft- bzw. Gasvolumen in der Halbzellenkammer 18 ein Druckausgleich und damit eine Druckresistenz der Bezugselektrode erreichen.

Um ein möglichst konstantes Potential der Bezugselektrode zu erreichen, sollte die Zusammensetzung des Primärelektrolyten über die Verwendungsdauer der Bezgzugslektrode möglichst konstant bleiben. Eine Kontamination des Primärelektrolyten durch Elektrodengifte aus dem Messmedium kann etwas vemindert werden, indem die Mess-Junktur als poröses Diafragma ausgestaltet ist, welches die Konvektion aus dem Messmedium etwas erschwert, und/oder indem der Innenraum des primären Stromschlüssels 8 vollständig durch den Primärelektrolyten gefüllt ist, was lediglich eine hydraulische Kompression des Primärelektrolyten zulässt und somit nur einen kleinen Volumenfluss durch die Primär-Junktur bedingt. Alternativ kann die Mess-Junktur wie die hier beschriebene Primär-Junktur als stark verdichtete Überführung ausgestaltet sein, wodurch eine Konvektion weitgehend vermieden und somit ein wesentlich besserer Schutz gegen ein unerwünschtes Eindringen von Substanzen aus dem Messmedium erreicht wird. Allerdings ergeben sich dadurch bekanntlich gewisse Fehlpotentiale an der Mess-Junktur, welche je nach Messmedium unterschiedlich sind.

Als Primärelektrolyt ist vorzugsweise ein silberfreier Elektrolyt einzusetzen, um allfällige Silbersalzfällungen an der Mess-Junktur auszuschliessen. Falls die Halbzelle eine Silber /Silberchloridelektrode beinhaltet, kann zudem ein chloridfreier Primärelektrolyt verwendet werden, um Silberchloridfällungen an der Primär-Junktur auszuschliessen; der Primärelektrolyt ist dann so zu wählen, dass an der Primär-Junktur möglichst geringe Diffusionspotentiale auftreten, was beispielsweise mit $Li_2SO_4$ gelingt.

Um ein Bersten der Bezugselektrode bei einer Temperaturerhöhung und dadurch bedingten hydraulischen Expansion des Primärelektrolyten zu vermeiden, ist im äusseren Elektrolytraum ein Luftpolster oder eine komprimierbare Schaumgummieinlage vorzusehen, wobei diese beispielsweise im oberen Abschlussteil 24 angeordnet sein kann. Bei Verwendung einer Schaumgummieinlage sollte diese geschlossene, komprimierbare aber nicht mit Elektrolyt füllbare Poren aufweisen.

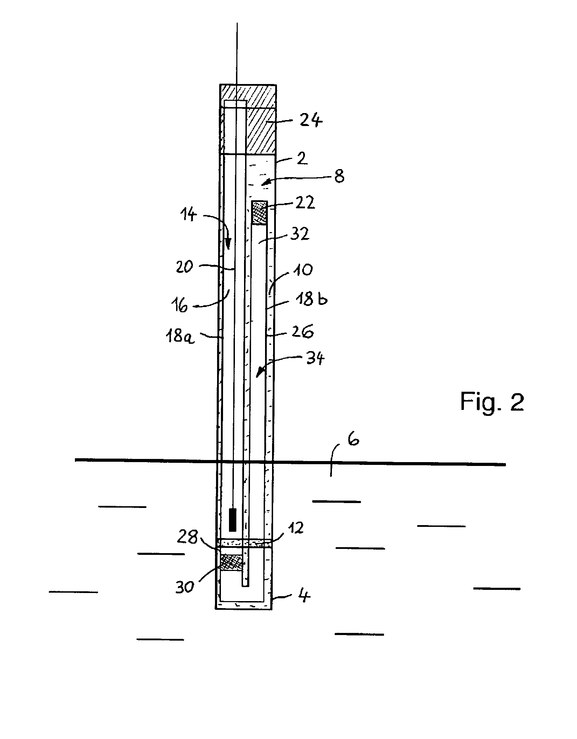

Die in der Figur 2 dargestellte Bezugselektrode - auch als "Triple-Junction-Elektrode" bezeichnet - beinhaltet einen doppelten Stromschlüssel. Sie weist wie die Bezugselektrode der Figur 1 ein rohrförmiges Gehäuse 2 auf, dessen unteres Ende 4 in ein Messmedium 6 eingetaucht ist. Ein primärer Stromschlüssel 8 wird durch einen im Gehäuse 2 enthaltenen Primärelektrolyten 10 gebildet, der über eine am unteren Ende 4 angeordnete Mess-Junktur 12 in elektrochemischem Kontakt mit dem Messmedium 6 steht. Des weiteren enthält die Bezugselektrode eine als Bezugselement wirkende elektrochemische Halbzelle 14 mit einem in einen Bezugselektrolyten 16 getauchten Ableitelement 20. Im Unterschied zur ersten Ausgestaltung ist jedoch die Halbzelle 14 in einem starren Glasröhrchen 18a untergebracht, auf dessen distalem Ende 28 ein elastischer Schlauch 18b angebracht ist, der andernendig eine in den Primärelektrolyten 10 mündende Primär-Junktur 22 aufweist. In diesem Beispiel ist also die Halbzellenkammer durch das starre Glasröhrchen 18a und den elastischen Schlauch 18b gebildet, wobei letzterer eine flexible Wandung 26 der Halbzellenkammer bildet. Das Glasröhrchen 18a ist am distalen Ende 28 mit einem als Sekundär-Junktur 30 wirkenden porösen Diafragma oder einem Glaswollstopfen versehen, welcher die Halbzellenkammer in einen Innenteil und einen Aussenteil unterteilt: im Innenteil befindet sich die eigentliche Halbzelle 14 mit dem Bezugselektrolyten 16, während im Aussenteil ein Sekundärelektrolyt 32 enthalten ist, der einen zwischen primärem Stromschlüssel 8 und Halbzelle 14 angeordneten sekundären Stromschlüssel 34 bildet. Der erforderliche elektrochemische Kontakt zwischen der Halbzelle 14 und dem Messmedium 6 erfolgt somit über die Sekundär-Junktur 30, den sekundären Stromschlüssel 34, die Primär-Junktur 22, den primären Stromschlüssel 8 und die Mess-Junktur 12.

Anstelle eines Diafragmas kann in der Primär-Junktur 22 auch ein ionenleitender Polymerstopfen oder eine semipermeable Membran vorgesehen sein. Trotz der höheren Verdichtung ergeben sich dadurch in der Regel keine Probleme aufgrund von Fehlpotentialen, da die Ionenkonzentrationen des Primärelektrolyten 10 und des Sekundärelektrolyten 32 - wenngleich allenfalls deutlich unterschiedlich - in aller Regel nur sehr langsam variieren. Somit lassen sich allfällige Fehlpotentiale auf zuverlässige Weise wegkalibrieren. Wichtig ist, dass jegliche Druckveränderung, die sich im primären Stromschlüssel 8 aufgrund eines Druckausgleichs über die Mess-Junktur 12 einstellt, über den flexiblen Wandteil 26 auch auf den sekundären Stromschlüssel 34 übertragen wird, so dass ein druckbedingtes Einströmen von allfenfalls kontaminiertem Primärelektrolyten 10 durch die Primär-Junktur 22 hindurch in die Halbzellenkammer 18a, 18b verhindert wird.

Eine besonders lange Haltbarkeit der Bezugselektrode ergibt sich, wenn die innerste Junktur, d.h. die Primär-Junktur 22 bei der Bezugselektrode der Figur 1 bzw. die Sekundär-Junktur 30 bei der Bezugselektrode der Figur 2 möglichst weit von der Mess-Junktur 12 entfernt liegt. Um störende Thermodiffusionspotentiale zu vermeiden und eine schnellere Temperaturangleichung an die Temperatur des Messmediums 6 zu erzielen, sollte die eigentlich potentialbestimmende Halbzelle 14 in einem Bereich des Gehäuses 2 liegen, der üblicherweise bei Messungen vom Messmedium 6 umgeben ist.

Bei der in Figur 2 dargestellten Bezugselektrode können gewünschtenfalls der Primärelektrolyt und der Sekundärelektrolyt unterschiedlich sein. In einer weiteren vorteilhaften Anwendung kann im Schlauchbereich auch noch eine Fängerpatrone für Silber- oder Quecksilberionen (wie beispielsweise in der EP 0 541 739 B1 beschrieben) untergebracht werden.

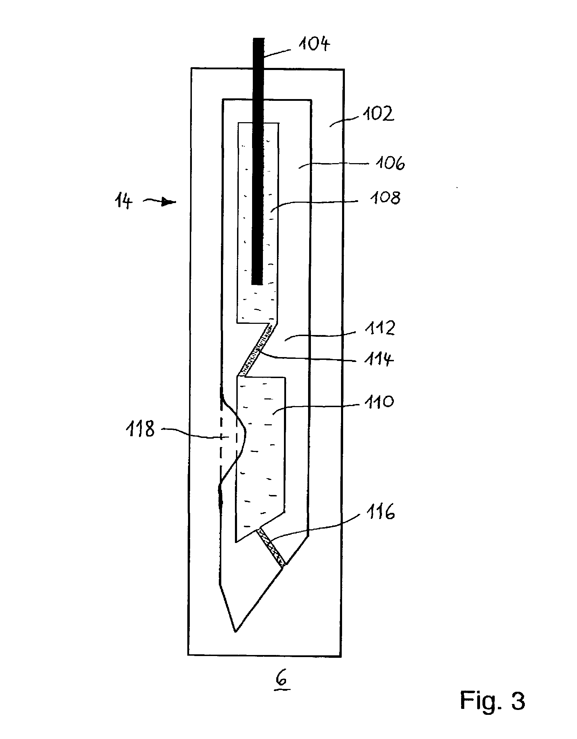

In der Figur 3 ist eine weitere Bezugselektrode dargestellt, wobei diese als planare Redox-Bezugselektrode in Dickfilmtechnik ausgestaltet ist. Eine Kunststofffolie bildet einen ersten Wandteil 102, auf dem in bekannter Siebdrucktechnik ein Stromableitelement 104 in Form einer Graphitleiterbahn aufgedruckt ist. Darüber ist eine rund 0.5 mm dicke Klebefolie 106, beispielsweise vom Typ Scotch 471M, angeordnet, welche einen rahmenförmigen Abstandhalter bildet. Dieser Abstandhalter ist mit Ausstanzungen versehen, welche einen Halbzellenbereich 108 sowie einen Stromschlüsselbereich 110 definieren, die durch einen Mittelsteg 112 voneinander getrennt sind. Eine schlitzförmige Ausnehmung 114 im Mittelsteg wirkt als Primär-Junktur, die zur Bildung eines elektrochemischen Kontaktes zwischen Halbzellenbereich 108 und Stromschlüsselbereich 110 vorgesehen ist. Eine weitere schlitzförmige Ausnehmung 116 im Abstandhalter bildet eine Mess-Junktur zur Bildung eines elektrochemischen Kontaktes zwischen dem Stromschlüsselbereich 110 und einem äusseren Messmedium. Zur Vermeidung einer Konvektion müssten die schlitzförmigen Ausnehmungen 114, 116 eine sehr geringe Schlitzbreite aufweisen, was an sich möglich ist aber hohe Anforderungen an die Fertigung stellt. Vorteilhafter ist es, die schlitzförmigen Ausnehmungen mit einem konvektionshemmenden Material, beispielsweise einem porösen Material auszufüllen, wodurch wesentlich einfacher handhabbare Schlitzbreiten verwendet werden können. Gewünschtenfalls können die schlitzförmigen Ausnehmungen mit einer stark verdichteten Füllung ausgestattet sein, woduch eine Konvektion im wesentlichen verhindert wird. Der Halbzellenbereich 108 enthält eine Redox-Halbzelle, welche durch das Ableitelement 104 sowie durch ein geeignetes Redoxsystem, beispielsweise ein in einem Gelelektrolyten gelöstes Red/Ox-Paar, gebildet wird. Der Stromschlüsselbereich 110 enthält einen geeigneten Brückenelektrolyten, beispielsweise eine gelartige Suspension von Kaliumchlorid. Eine in der Figur 3 nicht näher dargestellte Deckfolie, beispielsweise eine Kunststofffolie, ist auf der Klebefolie 106 aufgepresst und bildet einen zweiten Wandteil 118. Mindestens einer der beiden Wandteile 102 bzw. 118 ist mindestens in einem an den Halbzellenbereich 108 angrenzenden Abschnitt als flexibler Wandteil ausgebildet, mittels welchem ein Druckausgleich ohne Konvektion durch die Primär-Junktur 114 gewährleistet wird. Die in der Figur 3 dargestellte Bezugselektrode kann bei Bedarf in ein Schutzgehäuse eingebaut werden. Gewünschtenfalls kann die Bezugselektrode auch als "Triple-Junction-Elektode" ausgebildet, d.h. mit einem weiteren Stromschlüssel ausgestattet sein.

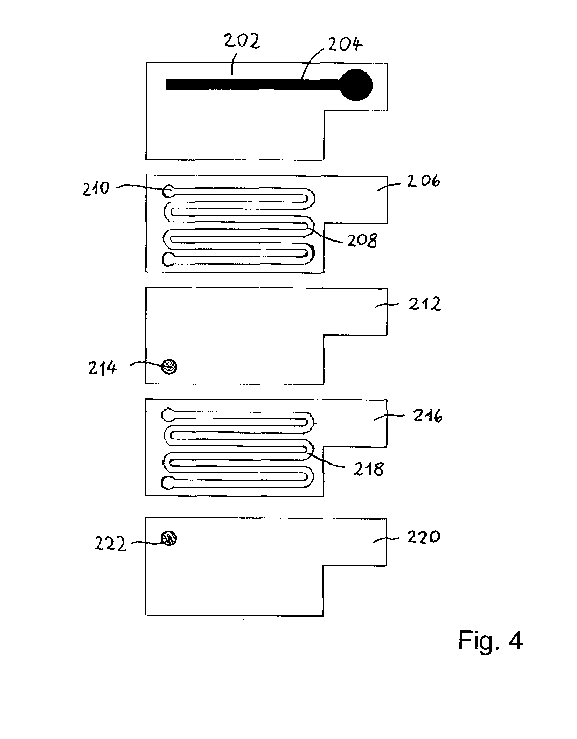

Die Figur 4 zeigt einen Bausatz für eine weitere Ausgestaltung einer Bezugselektrode, wobei die einzelnen Bauteile beginnend mit dem in der Figur 4 zuoberst dargestellten in der angegebenen Reihenfolge stapelweise aufeinander zu stellen und mit geeigneten Mitteln, beispielsweise mittels Scotch 471 M Klebefolie, miteinander zu verkleben sind. Vorteilhafterweise werden die Hohlräume der Bezugselektrode bereits während des Zusammenbaus befüllt, wobei hierfür eine Spritze gut geeignet ist.

Eine Bodenfolie 202, beispielsweise aus Mylar, ist mit einer als Ableitelement vorgesehenen, aufgedruckten Graphitleiterbahn 204 versehen. Darauf wird ein Halbzellenblock 206 gelegt, der eine als Halbzellenkammer vorgesehene, lange mäanderförmige Ausnehmung 208 enthält. Letztere kommt mit einem ersten Ende 210 über die Leiterbahn 204 zu liegen und dient zur Aufnahme eines geeigneten Redoxsystems, wobei dieses vorzugsweise als gelartige Lösung und/oder Suspension vorliegt. Als nächstes wird ein Zwischenblock 212 aufgelegt, der einen oberen Abschluss der Halbzellenkammer bildet. Eine im Zwischenblock 212 befindliche erste Durchgangsbohrung 214, welche mit einem porösen Material ausgefüllt ist, mündet in den bezüglich des Ableitelementes 204 distalen Teil der mäanderförmigen Ausnehmung 208 und bildet eine Primär-Junktur der Bezugselektrode. Auf die soeben beschriebene Anordnung wird nun ein Stromschlüsselblock 216 aufgelegt, der identisch zum Halbzellenblock 206 ausgebildet ist und insbesondere eine als Stromschlüsselkammer wirkende mäanderförmige Ausnehmung 218 aufweist. Letztere ist zur Aufnahme eines geeigneten Stromschlüsselelektrolyten vorgesehen. Schliesslich wird als oberer Abschluss noch ein Deckteil 220 aufgelegt. Wie der Figur 4 zu entnehmen ist, ist der Deckelteil 220 mit einer zweiten, ebenfalls mit einem porösen Material ausgefüllten, Durchgangsbohrung 222 versehen, welche gegenüber der ersten Durchgangsbohrung 214 des Zwischenblockes derart versetzt ist, dass die beiden Bohrungen in unterschiedliche Enden der mäanderförmigen Ausnehmung 218 münden. Die zweite Durchgangsbohrung 222 ist als Mess-Junktur der Bezugselektrode vorgesehen, um einen elektrochemischen Kontakt zwischen einem Messmedium und dem Stromschlüsselelektrolyten herzustellen. Während in der vorgängig beschriebenen gestapelten Anordnung je ein einzelner Halbzellenblock 206 und Stromschlüsselblock 216 vorgesehen ist, kann anstelle eines jeden dieser einzelnen Blöcke ohne weiteres eine Mehrzahl aufeinander gestapelter Blöcke, welche jeweils eine mäanderförmige Ausnehmung beinhalten, mit entsprechend ausgebildeten Zwischenblöcken vorgesehen sein. Damit lässt sich effektiv der durch die mäanderförmigen Ausnehmungen definierte Diffusionsweg vervielfachen.

Im gezeigten Beispiel bildet die Bodenfolie 202 einen flexiblen Wandbereich, mittels welchem ein Druckausgleich ohne Konvektion durch die Primär-Junktur 214 gewährleistet wird. Als Material für die Bodenfolie 202 eignen sich neben Mylar sogenannt halbelastische, flexible Materien wie weiche Polyolefine und dergleichen, da sich bei der folienartigen Ausgestaltung im Gegensatz zu einer schlauchförmig ausgebildeten Halbzellenkammer ein Druckausgleich auch mit weniger flexiblen Materialien bewerkstelligen lässt.

Die geschilderten Ausführungsbeispiele sind in Form, Gestaltung und Dimensionen nur exemplarisch zu verstehen. Der Fachmann wird je nach Bedarf auch abgewandelte Ausgestaltungen, die auf den gleichen Prinzipien beruhen, heranziehen.

Bezugszeichenliste

| 2 | Gehäuse |
|---|---|
| 4 | unteres Ende 4 von 2 |
| 6 | Messmedium |
| 8 | primärer Stromschlüssel |
| 10 | Primärelektrolyt |
| 12 | Mess-Junktur |
| 14 | Halbzelle |
| 16 | Bezugselektrolyt |
| 18 | Halbzellenkammer |
| 18a | Glasröhrchen |
| 18b | Schlauch |
| 20 | Ableitelement |
| 22 | Primär-Junktur |
| 24 | oberer Abschlussteil |
| 26 | flexible Wandung |
| 28 | distales Ende von 18a |
| 30 | Sekundär-Junktur |
| 32 | Sekundärelektrolyt |
| 34 | sekundärer Stromschlüssel |
| 102 | erster Wandteil |

| 104 | Ableitelement |
|---|---|
| 106 | Abstandhalter |
| 108 | Halbzellenbereich |
| 110 | Stromschlüsselbereich |
| 112 | Mittelsteg von 106 |
| 114 | Primär-Junktur |
| 116 | Sekundär-Junktur |
| 118 | zweiter Wandteil |
| 202 | Bodenfolie |
| 204 | Ableitelement |
| 206 | Halbzellenblock |
| 208 | Halbzellenkammer |
| 210 | erstes Ende von 208 |
| 212 | Zwischenblock |
| 214 | erste Durchgangsbohrung (Primär-Junktur) |
| 216 | Stromschlüsselblock |
| 218 | Stromschlüsselkammer |
| 220 | Deckteil |
| 222 | zweite Durchgangsbohrung (Mess-Junktur) |

Patentansprüche

1.  Druckresistente Bezugselektrode für elektrochemische Messungen, umfassend eine Halbzelle (14) sowie einen zur Schliessung eines elektrochemischen Kontaktes zwischen der Halbzelle (14) und einem Messmedium (6) vorgesehenen primären Stromschlüssel (8), welcher einen Primärelektrolyten (10) enthält, wobei die Halbzelle (14) einen Bezugselektrolyten (16) sowie ein in diesen getauchtes Ableitelement (20) aufweist, die in einer Halbzellenkammer (18) angeordnet sind, welche mit einer zum primären Stromschlüssel (8) führenden Primär-Junktur (22) versehen ist und ansonsten mediumdicht ausgebildet ist, **dadurch gekennzeichnet, dass** die Halbzellenkammer (18) innerhalb des primären Stromschlüssels (8) angeordnet ist und einen flexiblen Wandbereich (26) aufweist, welcher so ausgebildet ist, dass eine Druckdifferenz zwischen primärem Stromschlüssel (8) und Halbzelle (14) im wesentlichen ohne Konvektion durch die Primär-Junktur (22) ausgleichbar ist.

2.  Bezugselektrode nach Anspruch 1, **dadurch gekennzeichnet, dass** der flexible Wandbereich (26) durch einen Schlauch gebildet ist.

3.  Druckresistente Bezugselektrode für elektrochemische Messungen, umfassend eine Halbzelle (14) sowie einen zur Schliessung eines elektrochemischen Kontaktes zwischen der Halbzelle (14) und einem Messmedium (6) vorgesehenen primären Stromschlüssel (110), welcher einen Primärelektrolyten (10) enthält, wobei die Halbzelle (14) einen Bezugselektrolyten (16) sowie ein in diesen getauchtes Ableitelement (104) aufweist, die in einer Halbzellenkammer (108) angeordnet sind, welche mit einer zum primären Stromschlüssel (110) führenden Primär-Junktur (114) versehen ist und ansonsten mediumdicht ausgebildet ist, **dadurch gekennzeichnet, dass** die Halbzellenkammer (108) einen flexiblen Wandbereich (26) aufweist, welcher so ausgebildet ist, dass eine Druckdifferenz zwischen primärem Stromschlüssel (110) und Halbzelle (14) im wesentlichen ohne Konvektion durch die Primär-Junktur (114) ausgleichbar ist, und dass sie zwei im wesentlichen planparallel beabstandete Wandteile (102, 118) aufweist, die auf einem dazwischen liegenden rahmenförmigen Abstandhalter (106) angeordnet sind, wobei mindestens einer der Wandteile (102, 118) durch eine den flexiblen Wandbereich bildende Folie gebildet ist und wobei der Abstandhalter (106) durch einen Mittelsteg (112) in einen Halbzellenbereich (108) und einen Stromschlüsselbereich (110) geteilt ist, wobei die Primär-Junktur durch eine Ausnehmung (114) im Mittelsteg (112) gebildet ist, welche vorzugsweise mit einer konvektionshemmenden Füllung ausgestattet ist.

4. Druckresistente Bezugselektrode für elektrochemische Messungen, umfassend eine Halbzelle (14) sowie einen zur Schliessung eines elektrochemischen Kontaktes zwischen der Halbzelle (14) und einem Messmedium (6) vorgesehenen primären Stromschlüssel (218), welcher einen Primärelektrolyten (10) enthält, wobei die Halbzelle (14) einen Bezugselektrolyten (16) sowie ein in diesen getauchtes Ableitelement (204) aufweist, die in einer Halbzellenkammer (; 208) angeordnet sind, welche mit einer zum primären Stromschlüssel (218) führenden Primär-Junktur (214) versehen ist und ansonsten mediumdicht ausgebildet ist, **dadurch gekennzeichnet, dass** die Halbzellenkammer (208) einen flexiblen Wandbereich (26) aufweist, welcher so ausgebildet ist, dass eine Druckdifferenz zwischen primärem Stromschlüssel (218) und Halbzelle (14) im wesentlichen ohne Konvektion durch die Primär-Junktur (214) ausgleichbar ist, und dass sie eine Mehrzahl von stapelweise angeordneten Bauteilen (202, 206, 212, 216, 220) aufweist, wovon ein äusserer Bauteil (202) den flexiblen Wandbereich der Halbzellenkammer (208) bildet.

5. Bezugselektrode nach einem der Ansprüche 1 bis 4, **dadurch gekennzeichnet, dass** die Primär-Junktur (22; 114; 214) durch ein Diafragma gebildet ist.

6. Bezugselektrode nach Anspruch 5, **dadurch gekennzeichnet, dass** das Diafragma den flexiblen Wandbereich (26) bildet.

7. Bezugselektrode nach einem der Ansprüche 1 bis 6, **dadurch gekennzeichnet, dass** die Halbzellenkammer (18) einen zwischen der Halbzelle (14) und der Primär-Junktur (22) angeordneten sekundären Stromschlüssel (34) enthält, in welchem sich ein Sekundärelektrolyt (32) befindet, wobei zwischen Halbzelle (14) und sekundärem Stromschlüssel (34) eine Sekundär-Junktur (30) vorgesehen ist.

8. Bezugselektrode nach Anspruch 7, **dadurch gekennzeichnet, dass** der flexible Wandbereich (26) am sekundären Stromschlüssel (34) angeordnet ist.

9. Bezugselektrode nach einem der Ansprüche 1 oder 4 bis 8, **dadurch gekennzeichnet, dass** der flexible Wandbereich durch eine Folie (102, 118; 202) gebildet ist.

10. Bezugselektrode nach einem der Ansprüche 1 bis 9, **dadurch gekennzeichnet, dass** das Ableitelement als Leiterbahn (104; 204) ausgebildet ist.

11. Bezugselektrode nach einem der Ansprüche 1 bis 10, **dadurch gekennzeichnet, dass** die Halbzellenkammer (208) und/oder der primäre Stromschlüssel (218) mäanderförmig ausgebildet ist, um den Diffusionsweg zwischen Messmedium (6) und Halbzelle (14) zu verlängern.

12. Bezugselektrode nach einem der Ansprüche 1 bis 11, **dadurch gekennzeichnet, dass** einer oder mehrere der darin befindlichen Elektrolyten (10, 16, 32) in Gelform vorliegen.

13. Bezugselektrode nach einem der Ansprüche 1 bis 12, **dadurch gekennzeichnet, dass** die Primär-Junktur (22; 114; 214) als stark verdichtete Junktur ausgestaltet ist.

**Claims**

1. A pressure-resistant reference electrode for electrochemical measurements, comprising a half cell (14) and a primary electrolyte bridge (8), containing a primary electrolyte (10), which is provided for closing an electrochemical contact between the half cell (14) and a measurement medium (6), the half cell (14) having a reference electrolyte (16) and a lead-off element (20) immersed therein, which are positioned in a half cell chamber (18), which is provided with a primary junction (22) leading to the primary electrolyte bridge (8) and is otherwise implemented as medium-tight,
**characterized in that** the half cell chamber (18) is positioned inside the primary electrolyte bridge (8) and has a flexible wall region (26), which is implemented so that a pressure differential between primary electrolyte bridge (8) and half cell (14) may be equalized essentially without convection through the primary junction (22).

2. The reference electrode according to Claim 1, **characterized in that** the flexible wall region (26) is formed by a hose.

3. A pressure-resistant reference electrode for electrochemical measurements, comprising a half cell (14) and a primary electrolyte bridge (110), containing a primary electrolyte (10), which is provided for closing an electrochemical contact between the half cell (14) and a measurement medium (6), the half cell (14) having a reference electrolyte (16) and a lead-off element (104) immersed therein, which are positioned in a half cell chamber (108), which is provided with a primary junction (114) leading to the primary electrolyte bridge (110) and is otherwise implemented as medium-tight,
**characterized in that** the half cell chamber (108) has a flexible wall region (26), which is implemented so that a pressure differential between primary electrolyte bridge (110) and half cell (14) may be equalized essentially without convection through the primary junction (114), and it has two wall parts (102, 118), which are spaced apart essentially plane parallel and are positioned on a frame-type spacer (106) lying between them, at least one of the wall parts (102, 118) being formed by a film that forms the flexible wall region and the spacer (106) being divided by a central web (112) into a half cell region (108) and a electrolyte bridge region (110), the primary junction being formed by a recess (114) in the central web (112), which is preferably equipped with a convection-inhibiting filler.

4. A pressure-resistant reference electrode for electrochemical measurements, comprising a half cell (14) and a primary electrolyte bridge (218), containing a primary electrolyte (10), which is provided for closing an electrochemical contact between the half cell (14) and a measurement medium (6), the half cell (14) having a reference electrolyte (16) and a lead-off element (204) immersed therein, which are positioned in a half cell chamber (208), which is provided with a primary junction (214) leading to the primary electrolyte bridge (218) and is otherwise implemented as medium-tight,
**characterized in that** the half cell chamber (208) has a flexible wall region (26), which is implemented so that a pressure differential between primary electrolyte bridge (218) and half cell (14) may be equalized essentially without convection through the primary junction (214), and it has multiple stacked components (202, 206, 212, 216, 220), of which an outer component (202) forms the flexible wall region of the half cell chamber (208).

5. The reference electrode according to one of Claims 1 through 4,
**characterized in that** the primary junction (22; 114; 214) is formed by a diaphragm.

6. The reference electrode according to Claim 5, **characterized in that** the diaphragm forms the flexible wall region (26).

7. The reference electrode according to one of Claims 1 through 6,
**characterized in that** the half cell chamber (18) contains a secondary electrolyte bridge (34), positioned between the half cell (14) and the primary junction (22), in which a secondary electrolyte (32) is located, a secondary junction (30) being provided between half cell (14) and secondary electrolyte bridge (34).

8. The reference electrode according to Claim 7, **characterized in that** the flexible wall region (26) is positioned on the secondary electrolyte bridge (34).

9. The reference electrode according to one of Claims 1 or 4 through 8,
**characterized in that** the flexible wall region is formed by a film (102, 118; 202).

10. The reference electrode according to one of Claims 1 through 9,
**characterized in that** the lead-off element is implemented as a printed conductor (104; 204).

11. The reference electrode according to one of Claims 1 through 10,
**characterized in that** the half cell chamber (208) and/or the primary electrolyte bridge (218) are implemented as meandering in order to lengthen the diffusion pathway between measurement medium (6) and half cell (14).

12. The reference electrode according to one of Claims 1 through 11,
**characterized in that** one or more of the electrolytes (10, 16, 32) located therein is/are provided in gel form.

13. The reference electrode according to one of Claims 1 through 12,
**characterized in that** the primary junction (22; 114; 214) is designed as a strongly compacted junction.

**Revendications**

1. Electrode de référence résistante à la pression pour des mesures électrochimiques, comprenant une demi-cellule (14) et un pont électrolytique (8) primaire prévu pour la fermeture d'un contact électrochimique entre la demi-cellule (14) et un fluide de mesure (6), qui contient un électrolyte primaire (10), la demi-cellule (14) présentant un électrolyte de référence (16) et un élément conducteur (20) plongé dans celui-ci, qui sont disposés dans une chambre à demi-cellule (18), qui est pourvue d'une jointure primaire (22) aboutissant au pont électrolytique (8) primaire et est conçue par ailleurs de façon étanche au fluide, **caractérisée en ce que** la chambre à demi-cellule (18) est disposée à l'intérieur du pont électrolytique (8) primaire et présente une zone de paroi (26) flexible, qui est réalisée de telle sorte qu'une différence de pression entre le pont électrolytique (8) primaire et la demi-cellule (14) peut être compensée sensiblement sans convection par la jointure primaire (22).

2. Electrode de référence selon la revendication 1, **caractérisée en ce que** la zone de paroi (26) flexible est formée par un tuyau flexible.

3. Electrode de référence résistante à la pression pour des mesures électrochimiques, comprenant une demi-cellule (14) et un pont électrolytique (110) primaire prévu pour la fermeture d'un contact électrochimique entre la demi-cellule (14) et un fluide de mesure (6), qui contient un électrolyte primaire (10), la demi-cellule (14) présentant un électrolyte de référence (16) et un élément conducteur (104) plongé dans celui-ci, qui sont disposés dans une chambre à demi-cellule (108), qui est pourvue d'une jointure primaire (114) aboutissant au pont électrolytique (110) primaire et est conçue par ailleurs de façon étanche au fluide, **caractérisée en ce que** la chambre à demi-cellule (108) présente une zone de paroi (26) flexible qui est réalisée de telle sorte qu'une différence de pression entre le pont électrolytique (110) primaire et la demi-cellule (14) peut être compensée sensiblement sans convection par la jointure primaire (114), et **en ce qu'**elle présente deux parties de paroi (102, 118) espacées et sensiblement planes et parallèles, qui sont disposées sur un écarteur (106) en forme de cadre et intercalé, au moins une des parties de paroi (102, 118) étant formée par un film formant la zone de paroi flexible et l'écarteur (106) étant divisé par une barrette centrale (112) en une zone à demi-cellule (108) et une zone de pont électrolytique (110), la jointure primaire étant fournie par un évidement (114) dans la barrette centrale (112), qui est conçue de préférence avec une charge inhibant la convection.

4. Electrode de référence résistante à la pression pour des mesures électrochimiques, comprenant une demi-cellule (14) et un pont électrolytique (218) primaire prévu pour la fermeture d'un contact électrochimique entre la demi-cellule (14) et un fluide de mesure (6), qui contient un électrolyte primaire (10), la demi-cellule (14) présentant un électrolyte de référence (16) et un élément conducteur (204) plongé dans celui-ci, qui sont disposés dans une chambre à demi-cellule (208), qui est pourvue d'une jointure primaire (214) aboutissant au pont électrolytique (218) primaire et est conçue par ailleurs de façon étanche au fluide, **caractérisée en ce que** la chambre à demi-cellule (208) présente une zone de paroi (26) flexible, qui est réalisée de telle sorte qu'une différence de pression entre le pont électrolytique (218) primaire et la demi-cellule (14) peut être compensée sensiblement sans convection par la jointure primaire (214), et **en ce qu'**elle présente une pluralité de composants (202, 206, 212, 216, 220) pouvant être disposés en pile, dont un composant (202) extérieur forme la zone de paroi flexible de la chambre à demi-cellule (208).

5. Electrode de référence selon l'une quelconque des revendications 1 à 4, **caractérisée en ce que** la jointure primaire (22 ; 114 ; 214) est formée par un diaphragme.

6. Electrode de référence selon la revendication 5, **caractérisée en ce que** le diaphragme forme la zone de paroi (26) flexible.

7. Electrode de référence selon l'une des revendications 1 à 6, **caractérisée en ce que** la chambre à demi-cellule (18) contient un pont électrolytique (34) secondaire disposé entre la demi-cellule (14) et la jointure primaire (22), dans lequel se trouve un électrolyte secondaire (32), une jointure secondaire (30) étant prévue entre la demi-cellule (14) et le pont électrolytique (34) secondaire.

8. Electrode de référence selon la revendication 7, **caractérisée en ce que** la zone de paroi (26) flexible est disposée sur le pont électrolytique (34) secondaire.

9. Electrode de référence selon l'une des revendications 1 ou 4 à 8, **caractérisée en ce que** la zone de paroi flexible est formée par un film (102, 118 ; 202).

10. Electrode de référence selon l'une des revendications 1 à 9, **caractérisée en ce que** l'élément conducteur est conçu comme une piste conductrice (104 ; 204).

11. Electrode de référence selon l'une des revendications 1 à 10, **caractérisée en ce que** la chambre à demi-cellule (208) et/ou le pont électrolytique (218) est(sont) conçu(s) en forme de méandre, afin d'allonger la course de diffusion entre le fluide de mesure (6) et la demi-cellule (14).

12. Electrode de référence selon l'une des revendications 1 à 11, **caractérisée en ce que** un ou plusieurs électrolytes (10, 16, 32) se trouvant à l'intérieur sont présents sous forme de gel.

13. Electrode de référence selon l'une des revendications 1 à 12, **caractérisée en ce que** la jointure primaire (22 ; 114 ; 214) est conçue comme une jointure fortement resserrée.

Fig. 1

Fig. 2

Fig. 3

Fig. 4